**Europäisches Patentamt**

**European Patent Office**

**Office européen des brevets**

(19)

(11) Publication number: **0 373 646 B1**

# EUROPEAN PATENT SPECIFICATION

(45) Date of publication of patent specification: **08.03.95**

(51) Int. Cl.[6]: **C09J 7/02**

(21) Application number: **89123132.6**

(22) Date of filing: **14.12.89**

(54) **Adhesive tape.**

(30) Priority: **16.12.88 JP 318738/88**
**27.04.89 JP 108100/89**
**04.10.89 JP 259766/89**

(43) Date of publication of application:
**20.06.90 Bulletin 90/25**

(45) Publication of the grant of the patent:
**08.03.95 Bulletin 95/10**

(84) Designated Contracting States:
**BE CH DE ES FR GB IT LI NL**

(56) References cited:
**EP-A- 0 255 866**
**FR-A- 2 519 883**
**GB-A- 668 273**
**US-A- 4 781 957**

(73) Proprietor: **SUMITOMO CHEMICAL COMPANY, LIMITED**
**5-33 Kitahama 4-chome**
**Chuo-ku**
**Osaka-shi**
**Osaka (JP)**

(72) Inventor: **Ishikawa, Yuzuru**
**Koyo Chemical Co. Ltd., 3-4-17,**
**Shimotakaido**
**Suginami-Ku**
**Tokyo (JP)**
Inventor: **Ikeda, Tsuneta**
**Sumitomo Chemic. Co. Ltd., 7-9 Nihonbashi**
**2-chome**
**Chuo-Ku**
**Tokyo (JP)**
Inventor: **Nishino, Minoru**
**Sanvic Incorporated, 30-8, Horikiri 1-chome**
**Katsushika-Ku**
**Tokyo (JP)**

(74) Representative: **Henkel, Feiler, Hänzel & Partner**
**Möhlstrasse 37**
**D-81675 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

The present invention relates to an adhesive tape which is low in cost and whose properties such as unwindability, adhesiveness, trimmed clearance, printability and transparency are improved without affecting hand lateral cutting characteristics and, more particularly, it relates to the adhesive tape whose longitudinal tearing strength is improved.

In the conventional adhesive tape, as shown in Fig. 9, a molten synthetic resin material 101 is extruded into a sheet by an extruding machine 102, and the sheet is passed through a rubber roll 103 and a drawing roll 104 to form a smooth surface on one side and an uneven surface on the other side and then the processed by corona discharge so as to facilitate the coating of an adhesive, therefore a base film 107 is produced by passing through an electrode 105 and a processing roll 106.

As shown in Fig. 10, the base film 107 passing through the electrode 105 and the processing roll 106 is contacted to the former at the smooth surface 108 and to the latter at the uneven surface 109. The base film 107 thus prepared is coated with an adhesive on the smooth surface 108 to produce the adhesive tape.

As the prior art, an adhesive tape, in which an adhesive layer is provided on the smooth surface and the other surface is formed uneven, is disclosed in Japanese Publication Patent No. 13306/1975 "Adhesive Tape" or in Japanese Utility Model Patent No. 47907/1976 "Plastic Adhesive Tape."

In the prior art an adhesive tape which is formed in a body by providing a smooth adhesive layer on the smooth surface and forming the other surface uneven, there are following disadvantages.

(1) As shown in Fig. 10, in order to improve adhesion of the adhesive on the smooth surface 108 of the base film 107, the smooth surface 108 is processed by corona discharge by discharging from the electrode 105. But the corona discharge is struck through the uneven surface 109. That is, the uneven surface 109 is also partly processed by the corona discharge and susceptible to stick to the adhesives coated on the smooth surface 108 at that partly processed portion, so that the rolled adhesive tape is difficult to be unwound and blocking may occur.

(2) When using the adhesive tape, an adhesive layer surface is deformed unevenly by the uneven surface on the rear side, and the adhesive power is inevitably weakened since the adhesive area is reduced.

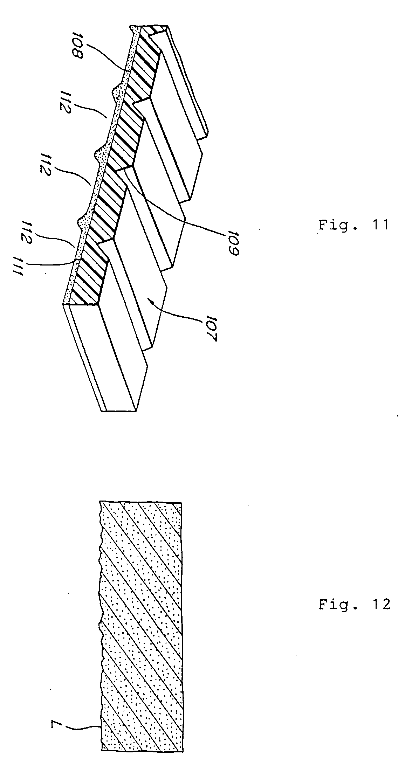

(3) When utilizing the adhesive tape as a trimming tape for obtaining a distinct coating line, as shown in Fig. 11, a coating material permeates into recesses 112 of the adhesive layer 111 of the base film 107, and the coating line L can not be finished distinctly as shown in Fig. 12. That is, a trimmed clearance of the coating is poor.

(4) Since the adhesive tape has an uneven rear surface, printing, stamping or writing on the rear surface can not be made clearly. That is, their properties are poor.

(5) Since the rear surface of the adhesive tape is formed unevenly, light is reflected irregularly to cause bad transparency.

As the result of our researches carried out to solve such properties as unwindability, adhesiveness, trimmed clearance, printability and transparency, we have developed an adhesive tape comprising a polyolefin resin base film formed with a smooth surface on one side and an uneven surface processed by corona discharge on the other side, and an adhesive layer coated with an adhesive on said uneven surface.

As to the unwindability property, it is practically very important among the various characteristics inherent to the adhesive tape.

In order to facilitate unwindability of the tape and to increase an anchoring force of an adhesive, a surface wetting tension of the adhesive coated surface must be larger than that of the rear side.

Therefore, there are such means as coating an anchor coating agent on the adhesive coated surface or corona discharge processing in order to increase the difference of surface wetting tension, and further a method of coating a stripping agent on the rear side. Among them the corona discharge processing is the best, because it is inexpensive and suitable for mass production.

In the economical corona discharge processing, though the processing roll and an electrode are kept in a given interval and the high voltage is applied to initiate the corona discharge while passing a plastic film therebetween, mars, stains and dusts sticked to the processing roll may frequently cause the corona discharge between the rear side of the base film and the processing roll, and the rear side is also subjected to the corona discharge processing, so that the surface wetting tension of the rear surface may increase. That is, if the plastic film is not tightly contacted to the processing roll, the corona discharge is struck through.

In the prior art, however, since the smooth surface must be processed by the corona discharge and the rear side is uneven, the rear side of the base film is not contacted to the processing roll tightly, thus the corona discharge is struck through and the surface wetting tension is increased. When the adhesive tape is produced by such a base film, its practical use may be hindered by hard unwindability and blocking occurred.

According to the present invention, when the uneven surface of the base film is processed by the corona discharge, since the smooth surface of the rear side is contacted tightly to the processing roll, the corona discharge is not struck through, so that the rear side of the base film is not exposed to the corona discharge processing and the adhesive tape with good unwinding properties can be produced.

The greatest feature of the present invention is that, as the result of research on preventing the corona discharge processing from striking through to improve the unwindability of the adhesive tape in use, an adhesive layer is provided by coating an adhesive on the uneven surface entirely different from the prior art. By this method, such properties as adhesiveness, trimmed clearance, printability and transparency which were disadvantages of the prior art have been improved unexpectedly.

That is, the present invention is directed to an adhesive tape comprising a polyolefin resin base film formed with a smooth surface on one side and an uneven surface processed by corona discharge on the other side, and an adhesive layer coated with an adhesive on the uneven surface. The present invention also includes an adhesive tape having a strong longitudinal tearing property, and comprising a base film made from a polyolefin resin formed on one side with a smooth surface pressed by a rubber roll, and on the other side with an uneven surface pressed by a drawing roll, and an adhesive layer coated with an adhesive on said uneven surface processed by corona discharge, the base film comprising the polyolefin resin having a specific melt index and/or the uneven surface having a specific shape.

BRIEF DESCRIPTION OF THE DRAWINGS

Fig. 1 is a perspective view of an adhesive tape rolled on a reel,
Fig. 2 is an enlarged perspective view of an adhesive tape,
Fig. 3 is a front view illustrating production of a base film of an adhesive tape of the present invention,
Fig. 4 is an enlarged front view of an essential portion of Fig. 3,
Fig. 5 is a plan view of a typical base film,
Fig. 6 is a perspective view of Fig. 5,
Fig. 7 is a plan view showing a state wherein a reinforcing bridge is provided on a base film,
Fig. 8 is a perspective view of Fig. 7,
Fig. 9 is a front view illustrating production of a base film of a conventional adhesive tape,
Fig. 10 is an enlarged front view of an essential portion of Fig. 9,
Fig. 11 is a perspective view of a conventional adhesive tape, and
Fig. 12 is a plan view showing a trimmed line of a coating line when an adhesive tape of Fig. 11 is used.

DETAILED DESCRIPTION OF THE INVENTION

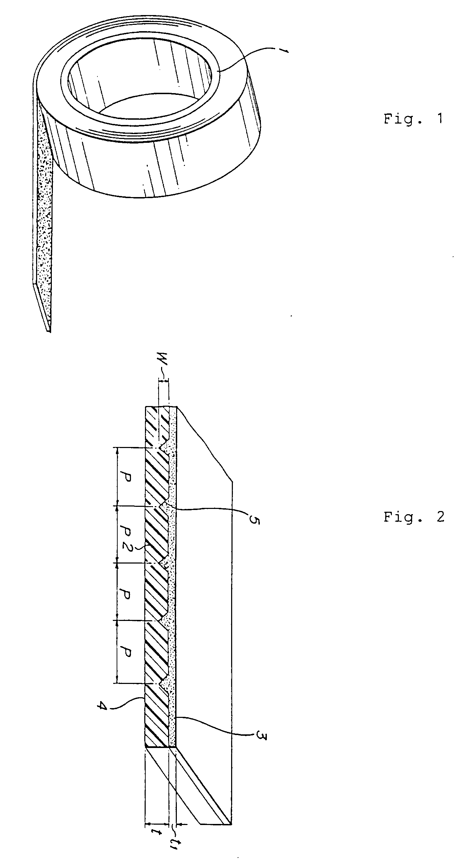

An adhesive tape of the present invention having good properties such as unwindability, adhesiveness, trimmed clearance, printability and transparency and being rolled on a reel 1 is shown in Fig. 1.

Fig. 2 is an enlarged perspective view of the adhesive tape, wherein the numeral 2 indicates a base film and 3 denotes an adhesive layer. The base film 2 used has on one side a smooth surface 4 and on the other side an uneven surface 5.

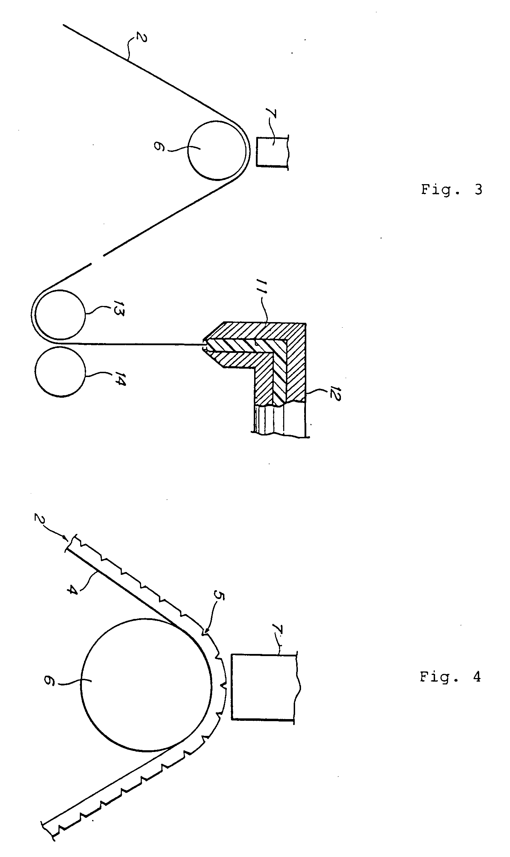

As shown in Fig. 3, the uneven surface 5 is formed by extruding a molten polyolefin resin 11 by an extruding machine 12 into a sheet, which is then passed through a drawing roll 13 and a rubber roll 14 so as to be pressed against the former by the latter and transferred with a uneven pattern thereon. As shown in Fig. 2, the uneven pattern may be formed continuously by providing regular uneven parallel indents which cross the adhesive tape orthogonally to its longitudinal direction to direct the hand cutting, in a predetermined interval P and depth W. Furthermore, fine reticulated unevenness of about 60 to 250 meshes may be formed on the uneven surface. After forming the uneven surface with the drawing roll 13 and the rubber roll 14, the base film is passed through a processing roll 6 and an electrode 7 for corona discharge processing to facilitate anchoring of an adhesive on the uneven surface 5. At this time, as shown enlarged in Fig. 4, the uneven surface 5 of the base film 2 is positioned on the electrode 7 side and the smooth surface 5 thereof is contacting to the processing roll 6.

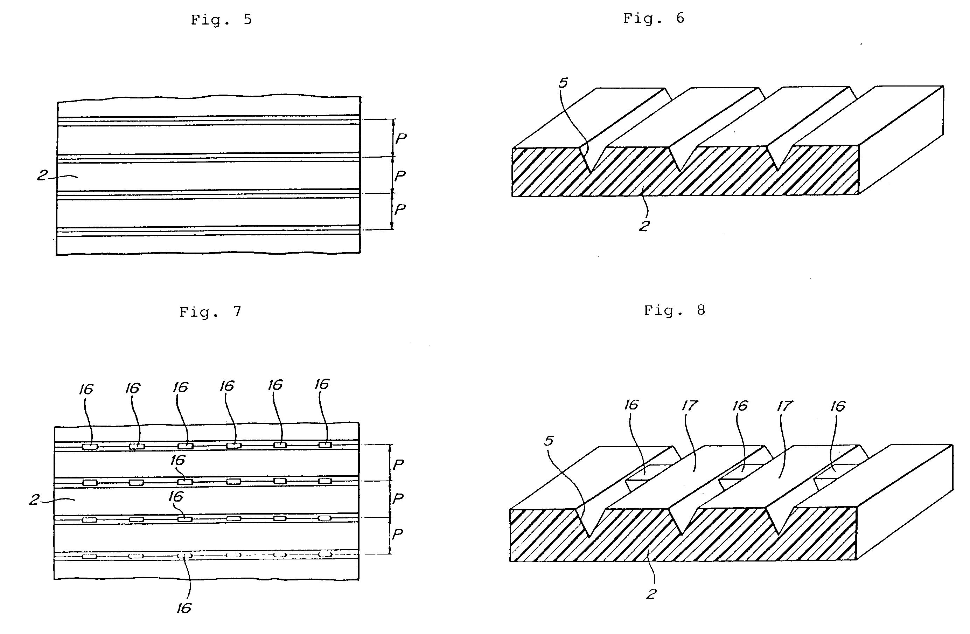

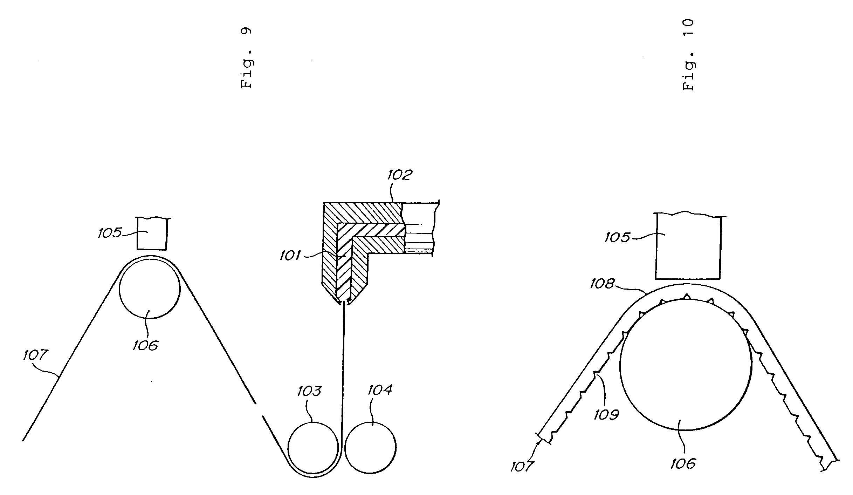

Though the base film 2 takes the form as shown in Figs. 5 and 6, it may be provided with a reinforcing bridge 16 longitudinally as shown in Figs. 7 and 8. However, though the upper face of the reinforcing bridge 16 may flush with the uneven projection 17 of the adhesive tape, it is preferably below the uneven projection 17 to cut the adhesive tape easily by hands.

As polyolefin resins used in the present invention, polyethylene, polypropylene and copolymers of ethylene or propylene and the other one or more kinds of alpha-olefins can be exemplified, here, as alpha-olefins, ethylene, propylene, butene -1, pentene -1, hexene -1, heptene -1, octene -1, nonene -1, 4-methylpentene -1, decene -1, etc. can be exemplified.

A molecular weight (related to melt index (MI) of resins) of the polyolefin resin used in a polyolefin resin base film has some connection with strengthening the longitudinal tearing property of the adhesive tape, so that the melt index may be made smaller within a range in which the resin film can be processed, the range of melt index may be 0.2 to 20g/10 min., and preferably 1.0 to 10.0g/10 min.

In the present invention, as to the uneven surface of the polyolefin resin base film, the uneven depth W and interval P are related to the longitudinal tearing strength of the adhesive tape, so that the uneven depth may be 0.03 - 0.30mm and preferably 0.04 - 0.12mm. The longitudinal tearing strength may increase below 0.03mm but the lateral tearing property may be deteriorated. Considering the easiness of hand cutting of the adhesive tape, the uneven interval (longitudinal interval of the adhesive tape) may be 0.5 - 5.0mm and preferably 0.6 - 1.4mm.

A surface wetting tension of the polyolefin resin base film used in the adhesive tape of the present invention is preferably 30 Dyn/cm or less on the smooth surface, and 35Dyn/cm or more on the uneven surface. When the surface wetting tension of the smooth surface is more than 30Dyn/cm, the adhesive tape wound in a roll is difficult to unwind, and moreover, unwanted blocking may occur, and when the surface wetting tension of the uneven surface is less than 35 Dyn/cm, anchoring of an adhesive on the uneven surface becomes insufficient.

Though the smooth surface 4 of the base film 2 is obtained by the rubber roll 14, a rubber roll which is as smooth as possible and preferably a silicon rubber roll may be used. Then, the uneven surface 5 of the base film 2 is processed by the corona discharge so as to facilitate anchoring of the adhesive and the adhesive layer 3 is laminated thereon. Any known adhesive may be used such as those in the groups of acryl, vinyl ether and silicon. Also, any laminating process may be employed such as a method of coating a solution or emulsion of an adhesive and drying or hot-melt coating. The adhesive tape in the present invention includes a two-layer construction comprising the base film 2 and the adhesive layer 3, the thickness t of the base film 2 is, though depending upon use , 30 to 500$\mu$m and $t_1$ of the adhesive layer 3 is less than 300$\mu$m from the uneven projection 17. Depending upon use of the adhesive tape, a coloring agent, filler and so on may be added to respective layers.

Next, the present invention will be specifically described in the following examples.

(Example 1) (Comparative Example 1) (Comparative Example 2)

With respect to the adhesive tape of the present invention having a good unwinding property, adhesiveness and trimmed clearance:

A masterbatch of polyethylene containing calcium carbonate of 50% by weight was mixed with a polyethylene resin (d = 0.96g/cm$^3$: melt index of 7g/10min. at 190°C and 2.16kg/cm$^2$) such that the calcium carbonate content became 20% by weight to the total resin, and extruded at 160 - 190°C to obtain a molten sheet. The molten sheet was pressed by a rubber roll so as to be formed with a smooth surface on one side, and a drawing roll (a) (refer to Table 3) having the surface capable of forming an uneven surface on the other side, then the sheet was cooled and the uneven surface was processed by corona discharge at 45Dyn/cm to obtain the base film for adhesive tape.

On the uneven surface of an uneven polyethylene film having the thickness of 130 m, a 40 wt% solution (about 4000 centipoise) of a copolymer of butyl acrylate (80 wt%) and 2-ethylhexyl acrylate (20 wt%) in ethyl acetate-toluene mixed solvent was coated with a roll coater, and the coated film was passed through a drying oven at 80 - 100°C for 3 minutes to obtain the adhesive tape formed with an acryl adhesive layer of 30 m thick on the polyethylene film.

In the comparative example 1, the smooth surface of the base film was processed by the corona discharge at 45 Dyn/cm by the same method as aforementioned, and coated with the adhesive to obtain the adhesive tape.

In the comparative example 2, the uneven surface of the base film was processed by the corona discharge at 45 Dyn/cm by the same method as aforementioned except using a rubber roll with coarse surface, and coated with the adhesive to obtain the adhesive tape.

Surface wetting tension of the smooth and uneven surfaces of the base film, and adhesiveness, unwinding property and trimmed clearance as a trimming tape of the adhesive tape are shown in Table 1. A bonding strength was tested by using stainless as a test plate at the peeling angle of 180° and peeling speed of 300mm/min. A peeling force was tested by the same measuring method as the bonding strength except using a polyolefin film as a test plate. The surface wetting tension was measured according to JIS K6768.

TABLE 1

|  |  | Base film | | Adhesive tape | | |
| --- | --- | --- | --- | --- | --- | --- |
|  | Contents | Surface wetting tension of uneven surface Dyn/cm | Surface wetting tension of smooth surface Dyn/cm | Bonding strength g/25mm | Peeling strength g/25mm | Trimmed clarance as trimming tape |
| Example 1 | Coated with the adhesive on the uneven surface | 45 | 30 or less | 1180 | 460 | good |
| Comparative example 1 | Coated with the adhesive on the smooth surface | 34 | 45 | 900 | 750 | poor |
| Comparative example 2 | Coated with the adhesive on the uneven surface, coarse smooth surface | 45 | 32 - 33 | 1000 | 700 | poor |

As shown in Table 1, it is apparent that an adhesive tape of the present invention provided with an adhesive layer on the uneven surface of a base film, is superior to the conventional one provided with the adhesive layer on the smooth surface in many respects.

When the surface wetting tension of the smooth surface of the base film exceeds 30Dyn/cm, the peeling strength is increased, namely, it is difficult to unwind and to use in practice. Besides, the bonding strength and the trimmed clearance as a trimming tape is deteriorated. It is also apparent in the adhesive tape of the present invention, that the insufficient smooth surface results in a poor unwinding property, adhesiveness and trimmed clearance.

(Example 2) (Comparative Example 3)

With respect to the adhesive tape of the present invention having a good unwinding property, adhesiveness, trimmed clearance, transparency and printability:

A mixture of equal amount of polyethylene resin (1) ($d = 0.96g/cm^3$: melt index of 5g/10min. at 190°C and $2.16kg/cm^2$) and polyethylene resin (2) ($d = 0.96g/cm^3$: melt index of 2g/10min. at 190°C and $2.16kg/cm^2$) was extruded at 160°C - 190°C to obtain a molten sheet. The molten sheet was pressed by a rubber roll to form a smooth surface on one side, and by a drawing roll (a) having the surface to form an uneven surface on the other side, then the sheet was cooled and the uneven surface was processed by the corona discharge at 45 Dyn/cm to obtain the base film for adhesive tape.

On the uneven surface of an uneven polyethylene film having the thickness of 130 m, a 40 wt% solution (about 4000 centipoise) of a copolymer of butyl acrylate (80 wt%) and 2-ethylhexyl acrylate (20 wt%) in ethyl acetate-toluene mixed solvent was coated with a roll coater, and the coated film was passed through a drying oven at 80 - 100°C for 3 minutes to obtain the adhesive tape formed with an acryl adhesive layer of 30 m thick on the polyethylene film.

In comparative example (3), the smooth surface of the base film was processed by the corona discharge at 45 Dyn/cm by the same method as aforementioned, and coated with the adhesive to obtain the adhesive tape.

The peeling property, adhesiveness, transparency, printability and the trimmed clearance as a trimming tape for the adhesive tape thus obtained are shown in Table 2.

**TABLE 2**

| Contents | Base Film | | Adhesive Tape | | | | |
| --- | --- | --- | --- | --- | --- | --- | --- |
| | Surface wetting tension of uneven surface Dyn/cm | Surface wetting tension of smooth surface Dyn/cm | Bonding strength g/25mm | Peeling strength g/25mm | Trimmed clearance as trimming tape | *1 transparency (%) | *2 Printability |
| Example 2 Coated with the adhesive on the uneven surface | 45 | 30 or less | 1200 | 460 | good | 30 | good |
| Comparative example 3 Coated with the adhesive on the smooth surface | 34 | 45 | 900 | 750 | poor | 54 | poor |

*1 Transparency: Measured by a haze meter

*2 Printability: Determined by printing condition by a water base stamp

As shown in Table 2, it is apparent that the adhesive tape of the present invention provided with an adhesive layer on the uneven surface of the base film, is superior to the conventional one provided with an adhesive layer on the smooth surface of the base film in many respects.

(Examples 3 and 4)

With respect to the adhesive tape of the present invention in which a longitudinal tearing strength is improved:

A masterbatch of polyethylene containing calcium carbonate of 50% by weight was mixed with a mixture of equal amount of polyethylene resin (1) (d = 0.96g/cm$^3$ : melt index of 5g/10min. at 190°C and 2.16kg/cm$^2$) and polyethylene resin (2) (d = 0.92g/cm$^3$: melt index of 5g/10min. at 190°C and 2.16kg/cm$^2$) such that the calcium carbonate content became 10% by weight to the total resin, and extruded at 160 - 190°C to obtain a molten sheet. The molten sheet was pressed by a rubber roll to form a smooth surface on one side, and by drawing rolls (a), (b) having the surface to form an uneven surface on the other side, then the sheet was cooled and the uneven surface was processed by the corona discharge at 45 Dyn/cm to obtain the base film for adhesive tape having the thickness of 0.13mm:

(Example 5)

A masterbatch of polyethylene containing calcium carbonate of 50% by weight was mixed with a mixture of equal amount of polyethylene resin (1) (d = 0.96g/cm$^3$: melt index of 5g/10min. at 190°C and 2.16kg/cm$^2$) and polyethylene resin (3) (d = 0.92 g/cm$^3$: melt index of 2g/10min. at 190°C and 2.16 Kg/cm$^2$) such that the calcium carbonate content became 10% by weight to the total resin, and extruded at 160°C - 190°C to obtain a molten sheet.

The molten sheet was pressed by a rubber roll to form a smooth surface on one side and a drawing roll (a) having the surface to form an uneven surface on the other side, then the sheet was cooled and the uneven surface was processed by the corona discharge at 45 Dyn/cm to obtain the base film for adhesive tape having the thickness of 0.13mm.

(Example 6 and 7)

A masterbatch of polyethylene containing calcium carbonate of 50% by weight was mixed with a mixture of equal amount of polyethylene resin (1) (d = 0.96 g/cm$^3$: melt index of 5g/10min. at 190°C and 2.16 kg/cm$^2$) and polyethylene resin (3) (d = 0.92g/cm$^3$: melt index of 2g/10min. at 190°C and 2.16kg/cm$^2$) such that the calcium carbonate content became 10% by weight to the total resin, and extruded at 190°C to obtain a molten sheet.

The molten sheet was pressed by a rubber roll to form a smooth surface on one side, and by drawing rolls (a), (b) having the surface to form an uneven surface on the other side, then the sheet was cooled and the uneven surface was processed by the corona discharge at 45 Dyn/cm to obtain the base film for adhesive tape having the thickness of 0.13mm.

(Comparative Example 4)

A molten sheet was obtained by using the same polyethylene resins (1) and (2) and masterbatch as the examples 3, 4 and by the same extruding process.

The molten sheet was pressed by a rubber roll to form a smooth surface on one side, and by a drawing roll (d) having the surface to form an uneven surface on the other side, the sheet was then cooled and the uneven surface was processed by the corona discharge at 45 Dyn/cm to obtain the base film for adhesive tape having the thickness of 0.13mm.

For the base film thus obtained, a lateral hand cutting strength and a longitudinal tearing strength of the adhesive tapes were measured, the results of which are shown in Table 3.

## TABLE 3

| | Type | Shape of drawing roll | | Ml of polyethylene resin | |
| | | Uneven depth (mm) | Uneven interval (mm) | d=0.96 g/cm$^3$ | d=0.92 g/cm$^3$ |
|---|---|---|---|---|---|
| Examples 3 | (a) | 0.12 | 1.2 | 5 | 5 |
| 4 | (b) | 0.08 | 1.2 | 5 | 5 |
| 5 | (a) | 0.12 | 1.2 | 5 | 2 |
| 6 | (b) | 0.08 | 1.2 | 5 | 2 |
| 7 | (c) | 0.04 | 1.2 | 5 | 2 |
| Comparative example 4 | (d) | 0.14 | 0.4 | 5 | 5 |

| | Film thickness (mm) | Lateral hand cutting strength of film (kg) * | Longitudinal tearing strength of film (kg) * |
|---|---|---|---|
| Examples 3 | 0.13 | 0.19 | 0.70 |
| 4 | 0.13 | 0.30 | 0.97 |
| 5 | 0.13 | 0.25 | 0.92 |
| 6 | 0.13 | 0.35 | 1.22 |
| 7 | 0.13 | 0.38 | 1.67 |
| Comparative example 4 | 0.13 | 0.18 | 0.45 |

* Measured at 500mm/min. according to Ermendorf Method.

Advantage of the Invention

According to the present invention, as described heretofore, by forming one side of a polyolefin resin base film into a smooth surface and the other side into an uneven surface, subjecting the uneven surface to a processing by corona discharge, and coating an adhesive on the uneven surface to provide an adhesive layer, an adhesive tape whose properties such as unwindability, adhesiveness, trimmed clearance, printability and transparency are superb can be obtained without affecting its lateral hand-cutting characteristics.

An adhesive tape obtained by the present invention can be broadly used, as the adhesive tape for trimming, light-, medium-, and heavy- packaging and temporary bonding.

**Claims**

1. An adhesive tape comprising a polyolefin resin base film (2) having a smooth surface (4) on one side and an uneven surface (5) on the other side as well as an adhesive layer (3) applied to the uneven surface, wherein the surface tension of the smooth surface (4) of the polyolefin resin base film (2) is less than 30 Dyn/cm and that one of the uneven surface (5) is more than 35 Dyn/cm.

2. An adhesive tape as claimed in claim 1, wherein the depth of the unevenness is in the range of from 0.03 to 0.30 mm and the interval of adjacent unevennesses is in the range of from 0.5 to 5.0 mm.

3. An adhesive tape as claimed in claim 1, wherein the melt index of the polyolefin resin is 0.2 to 20 g/10 min.

**Patentansprüche**

1. Klebeband, umfassend eine filmartige Polyolefinharzunterlage (2) mit glatter Oberfläche (4) auf einer Seite und unebener Oberfläche (5) auf der anderen Seite sowie eine auf die unebene Oberfläche aufgebrachte Klebstoffschicht (3), wobei die Oberflächenspannung der glatten Oberfläche (4) der filmartigen Polyolefinharzunterlage (2) weniger als 30 Dyn/cm und diejenige der unebenen Oberfläche (5) mehr als 35 Dyn/cm betragen.

2. Klebeband nach Anspruch 1, wobei die Tiefe der Unebenheiten im Bereich von 0,03 bis 0,30 mm und der Abstand benachbarter Unebenheiten im Bereich von 0,5 bis 5,0 mm liegen.

3. Klebeband nach Anspruch 1, wobei der Schmelzindex des Polyolefinharzes 0,2 bis 20 g/10 min beträgt.

**Revendications**

1. Ruban adhésif comprenant un film de base en résine de type polyoléfine (2) possédant une surface lisse (4) sur une face et une surface irrégulière (5) sur l'autre face, ainsi qu'une couche adhésive (3) appliquée sur la surface irrégulière, dans lequel la tension superficielle de la surface lisse (4) du film de base en résine de type polyoléfine (2) est inférieure à 30 dyn/cm et dans lequel celle de la surface irrégulière (5) est supérieure à 35 dyn/cm.

2. Ruban adhésif selon la revendication 1, dans lequel la hauteur de l'irrégularité se trouve dans la gamme allant de 0,03 à 0,30 mm et l'espacement des irrégularités adjacentes se trouve dans la gamme allant de 0,5 à 5,0 mm.

3. Ruban adhésif selon la revendication 1, dans lequel l'indice de fusion de la résine de type polyoléfine est compris entre 0,2 et 20 g/10 min.

Fig. 1

Fig. 2

10

Fig. 3

Fig. 4

Fig. 5

Fig. 6

Fig. 7

Fig. 8

Fig. 9

Fig. 10

Fig. 11

Fig. 12